# EUROPEAN PATENT APPLICATION

(11) **EP 4 808 064 A1**
(43) Date of publication of application: **16.09.2026**
(21) Application number: 24895370.5
(22) Date of filing: 02.04.2024
(51) Int. Cl.: H04L 41/0654

(54) **SERVICE BOARD MANAGEMENT METHOD AND SYSTEM, AND ELECTRONIC DEVICE AND STORAGE MEDIUM**

(30) Priority: 30.11.2023 CN 202311635340
(71) Applicant: ZTE CORPORATION, Shenzhen, Guangdong 518057 (CN)
(72) Inventor: LIANG, Shuang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/085648
(87) International publication number: WO 2025/112259

(57) **Abstract**

The present application discloses a management method for a service board, a system, an electronic device, and a storage medium, and relates to the technical field of communication. After a second arbitration network element loses connection with a first control board managed by the second arbitration network element, the second arbitration network element sends a first communication message to a first arbitration network element. After a disconnection occurs between a second service board managed by the second arbitration network element and the first control board, the second service board sends a target message to a first service board. The first service board managed by the first arbitration network element reports a second communication message to the first arbitration network element. The first arbitration network element, in response to the first communication message, queries a local second communication message. After determining that the second communication message includes the target message, it is determined that the second service board is out of management.

## Description

### CROSS-REFERENCE TO RELATED APPLICATIONS

The present application claims priority to Chinese Patent Application No. 202311635340.7, filed on November 30, 2023, the entire contents of which are incorporated herein by reference.

### TECHNICAL FIELD

The present application relates to the technical field of communication, and in particular to a management method for a service board, a system, an electronic device and a storage medium.

### BACKGROUND

With development of network technologies, requirements for stability of networks are increasingly high.

At present, in order to improve stability of networks, an arbitration network element is generally used to manage a control board. The control board includes a main control board and a backup control board, and is configured to control a service board. That is, when it is determined that the main control board fails, the service board is out of management, and at this time, switching the backup control board to a main control board can restore management of the service board. However, after both the main control board and the backup control board fail, the above problem that the service board is out of management cannot be solved.

Therefore, in practical applications, a solution is required that can still solve the problem that the service board is out of management after both the main control board and the backup control board fail.

### SUMMARY

A main objective of the present application is to provide a management method for a service board, a system, an electronic device, and a storage medium.

The present application provides a management method for a service board, applied to a first arbitration network element, the management method for the service board includes: in response to a first communication message, querying a local second communication message, the first communication message is sent by a second arbitration network element to the first arbitration network element after the second arbitration network element loses connection with a first control board managed by the second arbitration network element, and the second communication message is a message reported by a first service board managed by the first arbitration network element to the first arbitration network element; and after determining that the second communication message includes a target message, managing a second service board through the first service board, the target message is a message sent by the second service board managed by the second arbitration network element to the first service board after a disconnection occurs between the second service board and the first control board.

Exemplarily, in order to achieve the above objectives, the present application further provides a management system for a service board, the management system for the service board includes a first arbitration network element, a second arbitration network element, a second control board and a first service board managed by the first arbitration network element, and a first control unit and a second service board managed by the second arbitration network element, the first control board includes a first main control board and a first backup control board; the first arbitration network element is configured to, in response to a first communication message, query a local second communication message, the first communication message is sent by the second arbitration network element to the first arbitration network element after the second arbitration network element loses connection with the first control board, and the second communication message is a message reported by the first service board to the first arbitration network element; and after determining that the second communication message includes a target message, manage the second service board through the first service board, the target message is a message sent by the second service board to the first service board after the second service board loses connection with the first control board; and the second arbitration network element is configured to, in response to a disconnection from the first control board, send a first communication message to a first network element connected to the second arbitration network element.

Exemplarily, in order to achieve the above objectives, the present application further provides an electronic device, the device includes: a memory, a processor, and a management program for a service board stored on the memory and executable on the processor, the management program for the service board is configured to implement steps of the management method for a service board described above.

Exemplarily, in order to achieve the above objectives, the present application further provides a storage medium, the storage medium stores a management program for a service board, and when the management program for the service board is executed by a processor, steps of the management method for a service board described above are implemented.

### BRIEF DESCRIPTION OF THE DRAWINGS

FIG. 1 is a schematic flowchart of a management method for a service board according to a first embodiment of the present application.
FIG. 2 is a schematic diagram of a management system for a service board according to an embodiment of the present application.
FIG. 3 is a schematic diagram of a first scenario of the management method for a service board according to the first embodiment of the present application.
FIG. 4 is a schematic diagram of a second scenario of the management method for a service board according to a second embodiment of the present application.
FIG. 5 is a schematic diagram of a hardware operating environment according to an embodiment of the present application.

The realization of the purpose, functional features and advantages of the present application will be further explained in conjunction with the embodiments and with reference to the accompanying drawings.

### DETAILED DESCRIPTION OF THE EMBODIMENTS

The embodiments described herein are merely used to explain the present application, and are not intended to limit the present application.

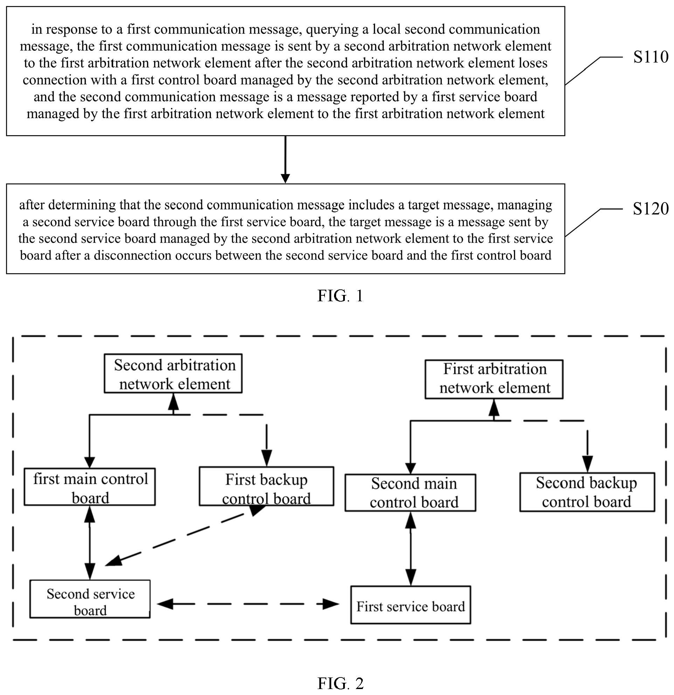

With reference to FIG. 1, FIG. 1 is a schematic flowchart of a management method for a service board according to a first embodiment of the present application.

This embodiment provides an embodiment of a management method for a service board. Although a logical order is illustrated in the flowchart, in some cases, steps shown or described may be executed in an order different from that described herein.

In this embodiment, the management method for a service board is applied to a first arbitration network element, and the management method for the service board includes the following steps:

Step S110: in response to a first communication message, querying a local second communication message, the first communication message is sent by a second arbitration network element to the first arbitration network element after the second arbitration network element loses connection with a first control board managed by the second arbitration network element, and the second communication message is a message reported by a first service board managed by the first arbitration network element to the first arbitration network element.

The first arbitration network element belongs to a management system for a service board. As shown in FIG. 2, the management system for the service board further includes a second arbitration network element, a second control board and a first service board managed by the first arbitration network element, and a first control board and a second service board managed by the second arbitration network element.

The first arbitration network element and the second arbitration network element are both network elements configured with an arbitration agent function. The arbitration agent function of the second arbitration network element is configured to perform arbitration management on a first control board or a second service board. The first control board includes a first main control board and a first backup control board. Arbitration refers to making a decision among multiple objects. A manner in which the second arbitration network element performs arbitration management on the first control board includes, but is not limited to, setting the first backup control board as a new main control board when the first main control board fails.

The network element includes switching equipment, terminal equipment, transmission equipment, and the like. The configuration of the arbitration agent function may be implemented through network management, or the arbitration agent function may be directly built in the network element.

In an embodiment, taking the second arbitration network element as an example, a process in which the second arbitration network element manages the second service board includes: after receiving, from network management, a service instruction corresponding to the second service board, the second arbitration network element sends the service instruction to the first main control board. Since the first main control board is directly connected to the first service board, the first main control board forwards the service instruction to the second service board, and the second service board processes the service instruction. The service instruction includes, but is not limited to, an instruction corresponding to an Optical Transport Network (OTN) service and an instruction corresponding to a Packet Transport Network (PTN) service.

Taking the second arbitration network element as an example, after both the first main control board and the first backup control board fail, for a service instruction delivered by network management to the second arbitration network element, the second arbitration network element cannot send the service instruction to the first main control board or the first backup control board and cannot deliver, through the first main control board or the first backup control board, the service instruction to the second service board, resulting in the second service board being out of management, and the related art cannot solve the above problem that the second service board is out of management.

In order to solve the above problem, in this embodiment, after the second arbitration network element loses connection with the first control board managed by the second arbitration network element, the second arbitration network element sends a first communication message to the first arbitration network element. After a disconnection occurs between the second service board managed by the second arbitration network element and the first control board, the second service board sends a target message to the first service board, and the first service board managed by the first arbitration network element reports a second communication message to the first arbitration network element.

Therefore, before querying the local second communication message in response to the first communication message, the first arbitration network element receives the second communication message reported by the first service board through a second control board, the second control board is a control board managed by the first arbitration network element.

The first communication message and the second communication message are both one of a handshake message and a heartbeat message.

A third communication message is a heartbeat packet. A second main control board sends a heartbeat packet to the second arbitration network element in real time. If the heartbeat packet is not received within a preset first period, a disconnection is determined, and disconnection information, disconnection time, and the like are added into the first communication message. If the third communication message is a handshake packet, the second arbitration network element sends a handshake packet to the second main control board in real time. If a confirmation packet (Acknowledge (ACK) packet) sent by the second main control board is not received within a second preset period, a disconnection is determined.

The preset first period and the preset second period may be respectively set according to requirements, for example, 2 ms, 3 ms, and the like, which are not specifically limited in this embodiment.

A message format of the first communication message and the second communication message is preset. The first communication message and the second communication message have identical parameter types, the parameter types include disconnection information, disconnection time, and the like.

In this embodiment, in response to a first communication message, the first arbitration network element queries a local second communication message. If a message matching the first communication message is not found in the local second communication message, no further operation is performed.

In an embodiment, an implementation manner for determining whether the second communication message includes a target message matching the first communication message includes: determining a source address of a communication message in the second communication message; and determining that the communication message having a source address corresponding to the second service board is the target message.

The first communication message is sent by the second arbitration network element to the first arbitration network element. After determining that the second communication message includes a target message sent by the second service board, it is determined that matching of messages is successful, that is, messages indicating disconnection sent by both the second arbitration network element and the second service board are received.

Another implementation manner for determining whether the second communication message includes a target message matching the first communication message includes: directly comparing parameter information carried in the first communication message and the second communication message. For example, disconnection information carried in the first communication message and the second communication message is compared. If the disconnection information carried in the first communication message indicates disconnection from the first control board, and the second communication message includes a message whose disconnection information indicates disconnection from the first control board, it is determined that the message whose disconnection information indicates disconnection from the first control board is the target message.

Step S120: after determining that the second communication message includes a target message, managing a second service board through the first service board, the target message is a message sent by the second service board managed by the second arbitration network element to the first service board after a disconnection occurs between the second service board and the first control board.

Since the second communication message is configured to indicate that the second service board managed by the second arbitration network element loses connection with the first control board, and the first communication message is configured to indicate that the second arbitration network element loses connection with the first control board, after receiving the first communication message and determining that the second communication message includes the target message, it is possible to determine that the second service board is out of management. Therefore, the first arbitration network element needs to take over the second service board, that is, to manage the second service board through the first service board.

Before managing the second service board through the first service board, that is, before formally taking over the second service board, the first arbitration network element needs to first notify the second arbitration network element, and after receiving feedback from the second arbitration network element, the first arbitration network element starts to manage the second service board through the first service board.

In an embodiment, before managing the second service board through the first service board, the first arbitration network element sends a feedback message to the second arbitration network element.

The feedback message is configured to indicate that the first arbitration network element manages the second service board. That is, the first arbitration network element sends the feedback message to the second arbitration network element to notify that the second service board will be managed by the first arbitration network element. After receiving feedback information from the second arbitration network element corresponding to the feedback message, the first arbitration network element starts to manage the second service board through the first service board.

The feedback message carries information such as a service transmission path.

In an embodiment, an implementation manner of managing the second service board through the first service board includes: in response to a service instruction corresponding to the second service board sent by the second arbitration network element, the first arbitration network element transmits the service instruction to the second service board through the first service board.

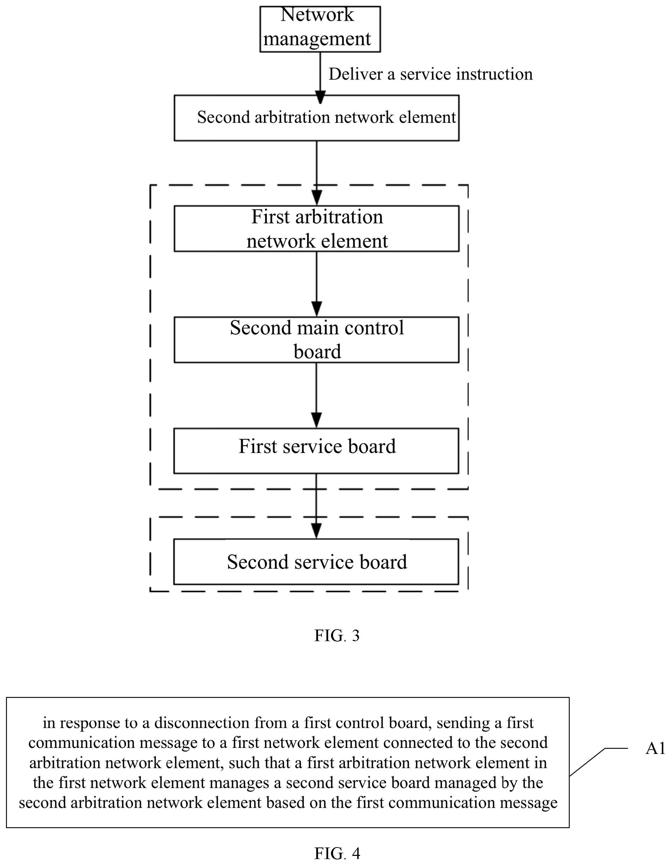

The service instruction is sent by the second arbitration network element to the first arbitration network element after receiving the feedback message. As shown in FIG. 3, the second arbitration network element receives a service instruction delivered by network management to the second service board. The second arbitration network element forwards the service instruction to the first arbitration network element based on the service transmission path. The first arbitration network element delivers the service instruction to the first service board, and the first service board further delivers the service instruction to the second service board (service boards managed by different arbitration network elements are in communication connection, but control boards managed by different arbitration network elements are not directly in communication connection), thereby ensuring that after both the first main control board and the first backup control board fail, the second service board can still normally process services, that is, the second service board can be managed by the first arbitration network element, thereby solving the above problem that the second service board is out of management and improving stability of the network.

With reference to FIG. 4, based on the above first embodiment, a second embodiment of the management method for a service board of the present application is provided. In this embodiment, the management method is applied to a second arbitration network element, and the management method for the service board includes:
A1: in response to a disconnection from a first control board, sending a first communication message to a first network element connected to the second arbitration network element, such that a first arbitration network element in the first network element manages a second service board managed by the second arbitration network element based on the first communication message.

The first control board is a control board managed by the second arbitration network element, and the first control board includes a first main control board and a first backup control board.

In this embodiment, the management method for a service board is applied to the second arbitration network element.

In an embodiment, in response to a disconnection from the first control board, the second arbitration network element sends a first communication message to a first network element connected to the second arbitration network element. A specific sending manner may be broadcasting or multicasting. The first network element includes the first arbitration network element, and therefore the first arbitration network element can receive the first communication message.

A process in which the second arbitration network element determines whether the second arbitration network element loses connection with the first control board may be as follows. As shown in FIG. 2, the second arbitration network element sends a third communication message to a second main control board in real time, but does not receive feedback information corresponding to the third communication message from the second main control board. In an embodiment, the second arbitration network element sends the third communication message to a second backup control board, and also does not receive feedback information corresponding to the third communication message from the second backup control board, and the second arbitration network element determines that the second arbitration network element loses connection with the first control board.

In an embodiment, the second arbitration network element sends a first communication message to a first network element connected to the second arbitration network element, and the first communication message is configured to indicate that the second arbitration network element loses connection with the first control board.

In an embodiment, after a disconnection occurs between the second service board managed by the second arbitration network element and the first control board, the second service board sends a second communication message to a directly connected first-hop service board. When the first service board in the first-hop service board receives the second communication message, the first service board reports the second communication message to the first arbitration network element managing the first service board.

After sending the first communication message to the first network element connected to the second arbitration network element, the second arbitration network element, in response to a feedback message sent by the first arbitration network element, sends a service instruction corresponding to the second service board to the first arbitration network element.

In an embodiment, the feedback message is configured to indicate that the first arbitration network element manages the second service board, and the feedback message is sent by the first arbitration network element to the second arbitration network element after determining that a target message exists in the second communication message.

Based on the above description, the second communication message is reported by the first service board managed by the first arbitration network element to the first arbitration network element, the target message is a message sent by the second service board managed by the second arbitration network element to the first service board after a disconnection occurs between the second service board and the first control board, and the first service board and the second service board are directly connected.

A process in which the second service board managed by the second arbitration network element determines a disconnection from the first control board may be as follows. As shown in FIG. 2, the second service board reports a fourth communication message to a first main control board and a first backup control board in the first control board in real time, and when feedback information corresponding to the fourth communication message is not received from the first main control board and the first backup control board, respectively, a disconnection from the first control board is determined.

In an embodiment, the second service board sends a second communication message to a directly connected first-hop service board. The first service board in the first-hop service board reports the second communication message to the first arbitration network element through a second control board. The second communication message is configured to indicate that the second service board managed by the second arbitration network element loses connection with the first control board. The first-hop service board directly connected to the second service board may include one or more service boards. In a case of including multiple service boards, the second service board sends the second communication message to the directly connected first-hop service boards in a multicast manner.

In an embodiment, the third communication message and the fourth communication message may also be one of a handshake message and a heartbeat message.

In this embodiment, after the second arbitration network element loses connection with the first control board managed by the second arbitration network element, the second arbitration network element sends a first communication message to a first network element connected to the second arbitration network element. After a disconnection occurs between the second service board managed by the second arbitration network element and the first control board, the second service board sends a second communication message to a directly connected first-hop service board, such that a first arbitration network element in the first network element manages the second service board managed by the second arbitration network element based on the first communication message, thereby solving the problem that the second service board loses connection.

Based on the above first embodiment and second embodiment, a third embodiment of the management method for a service board of the present application is provided. In this embodiment, in order to reduce the message matching time and to reduce a quantity of first communication messages broadcast by the second arbitration network element, the first arbitration network element may be a first-hop arbitration network element directly connected to the second arbitration network element.

Due to service requirements, the second arbitration network element is connected to a plurality of arbitration network elements. The connection includes direct connection and indirect connection. A data transmission speed between directly connected arbitration network elements is higher than a data transmission speed between indirectly connected network elements.

Therefore, the second arbitration network element sends the first communication message only to the first-hop arbitration network element directly connected to the second arbitration network element, thereby shortening a time from disconnection of the second service board to takeover of the second service board by the first arbitration network element, improving stability of the network, shortening a communication distance when subsequently delivering a service instruction, and improving timeliness of service processing.

In an embodiment, since the second arbitration network element sends the first communication message to all first-hop arbitration network elements directly connected thereto, all the directly connected first-hop arbitration network elements receive the first communication message. Since the second service board only needs to be taken over by one other arbitration network element, and considering that a longer transmission distance results in a longer data transmission time, distances between the directly connected first-hop arbitration network elements and the second arbitration network element also affect efficiency of taking over the second service board.

In order to avoid a situation in which a plurality of arbitration network elements take over the second service board, resulting in waste of resources, in this embodiment, the first communication message may be sent to a first arbitration network element closest to the second arbitration network element among the directly connected first-hop arbitration network elements, thereby achieving purposes of saving time and reducing a scope of message matching. Therefore, the first arbitration network element may also be an arbitration network element closest to the second arbitration network element among the first-hop arbitration network elements.

In this embodiment, by limiting a sending target when the second arbitration network element sends the first communication message, a scope of subsequent message matching is reduced and data transmission time is saved, thereby improving stability of the network and efficiency of service processing.

Based on the above first embodiment, a third embodiment of the management method for a service board of the present application is provided. In this embodiment, the first arbitration network element is a first-hop network element directly connected to the second arbitration network element in the first network element, and the first-hop network element is configured as the first arbitration network element in response to a failure of the second arbitration network element.

In a network architecture, there are generally a large number of first network elements. In a specific implementation process, all network elements in the network may be configured as arbitration network elements, or some network elements may be configured as arbitration network elements. Configuring all network elements as arbitration network elements requires a large amount of engineering effort. In order to improve configuration efficiency, some network elements may be configured as arbitration network elements.

Generally, in order to facilitate configuration of an arbitration agent function for network elements, each network element in the network corresponds to a location attribute tag. The location attribute tag includes an edge geographic location tag and a non-edge geographic location tag. The edge geographic location tag is configured to indicate that the network element is deployed as an edge network element in a corresponding geographic region (whether the network element is located at an edge of the corresponding geographic region may be determined based on a geographic location). It is not necessary to configure the arbitration agent function for network elements having the non-edge geographic location tag.

A preset geographic region generally refers to a geographic region divided according to administrative regions. The administrative regions include a provincial administrative region, a prefecture-level administrative region, a county-level administrative region, and the like. In addition, the geographic region may also be a geographic region obtained by division according to a service scope. Taking a case in which the geographic region is a provincial administrative region as an example, data between Province A and Province B is transmitted through an edge network element A and an edge network element B located at edges of Province A and Province B. In order to reduce cost, the edge network element A and the edge network element B are generally unique. That is, data between Province A and Province B is transmitted through a single communication link. Therefore, if the edge network element A and/or the edge network element B cannot normally operate, a data transmission channel between Province A and Province B will be lost. In order to improve stability of the data transmission channel, the edge network element A and the edge network element B need to be configured as edge arbitration network elements.

In an embodiment, it is assumed that the first arbitration network element and the second arbitration network element are network elements having an edge geographic location tag. The first network element includes a plurality of first-hop network elements directly connected to the second arbitration network element. The plurality of directly connected first-hop network elements include network elements located within a geographic region of the second arbitration network element and network elements located outside the geographic region of the second arbitration network element.

In a case where the second arbitration network element fails, a first-hop network element located within a geographic region of the second arbitration network element may be configured as an edge arbitration network element (the first arbitration network element, that is, the second service board managed by the second arbitration network element is taken over by the first arbitration network element located within the geographic region of the second arbitration network element), or a first-hop network element located outside the geographic region of the second arbitration network element may take over the second service board managed by the second arbitration network element (the first-hop network element located outside the geographic region of the second arbitration network element is originally the first arbitration network element, and after the second arbitration network element fails, the second service board is taken over by the first arbitration network element in the first-hop network element located outside the geographic region of the second arbitration network element).

In this embodiment, by using the above manner, only one arbitration network element exists in each geographic region, and in a case where the only arbitration network element in the geographic region fails, the second service board managed by the second arbitration network element is taken over by the first arbitration network element located within the geographic region of the second arbitration network element, or the second service board is taken over by the first arbitration network element in the first-hop network element located outside the geographic region of the second arbitration network element, thereby further improving network communication stability between different geographic regions on the premise of saving cost.

In addition, the present application further provides a management apparatus for a service board, applied to a first arbitration network element, the apparatus includes:
a message query module, configured to, in response to a first communication message, query a local second communication message, the first communication message is sent by a second arbitration network element to the first arbitration network element after the second arbitration network element loses connection with a first control board managed by the second arbitration network element, and the second communication message is a message reported by a first service board managed by the first arbitration network element to the first arbitration network element; and
a service board management module, configured to, after determining that the second communication message includes a target message, manage a second service board through the first service board, the target message is a message sent by the second service board managed by the second arbitration network element to the first service board after a disconnection occurs between the second service board and the first control board.

In an embodiment, the first control board includes a first main control board and a first backup control board.

In an embodiment, before managing the second service board through the first service board, the apparatus further includes: a feedback module, configured to send a feedback message to the second arbitration network element, the feedback message is configured to indicate that the first arbitration network element manages the second service board.

In an embodiment, the service board management module includes: a service board management submodule, configured to, in response to a service instruction corresponding to the second service board sent by the second arbitration network element, transmit the service instruction to the second service board through the first service board, the service instruction is sent by the second arbitration network element to the first arbitration network element after receiving the feedback message.

In an embodiment, the apparatus further includes: a source address determining module, configured to determine a source address of a communication message in the second communication message; and a target message determining module, configured to determine that the communication message having a source address corresponding to the second service board is the target message.

In an embodiment, the first communication message and the second communication message are both one of a handshake message and a heartbeat message, and parameter types of the first communication message and the second communication message are identical.

In an embodiment, before querying the local second communication message in response to the first communication message, the apparatus further includes: a message receiving module, configured to receive the second communication message reported by the first service board through a second control board, the second control board is a control board managed by the first arbitration network element.

Specific implementations of the management apparatus for a service board of the present application are substantially the same as those of the embodiments of the management method for a service board described above, and are not described herein again.

Exemplarily, the present application further provides a management apparatus for a service board, applied to a second arbitration network element, the apparatus includes: a message sending module, configured to, in response to a disconnection from a first control board, send a first communication message to a first network element connected to the second arbitration network element, such that a first arbitration network element in the first network element manages a second service board managed by the second arbitration network element based on the first communication message; the first control board is a control board managed by the second arbitration network element, and the first control board includes a first main control board and a first backup control board.

In an embodiment, after sending the first communication message to the first network element connected to the second arbitration network element, the apparatus further includes: an instruction sending module, configured to, in response to a feedback message sent by the first arbitration network element, send a service instruction corresponding to the second service board to the first arbitration network element; the feedback message is configured to indicate that the first arbitration network element manages the second service board, the feedback message is sent by the first arbitration network element to the second arbitration network element after determining that a target message exists in a second communication message, the second communication message is reported by a first service board managed by the first arbitration network element to the first arbitration network element, the target message is a message sent by the second service board managed by the second arbitration network element to the first service board after a disconnection occurs between the second service board and the first control board, and the first service board and the second service board are directly connected.

In an embodiment, the first arbitration network element is a first-hop arbitration network element directly connected to the second arbitration network element.

In an embodiment, the first arbitration network element is a first-hop network element directly connected to the second arbitration network element in the first network element, and the first-hop network element is configured as the first arbitration network element in response to a failure of the second arbitration network element.

Specific implementations of the management apparatus for a service board of the present application are substantially the same as those of the embodiments of the management method for a service board described above, and are not described herein again.

Exemplarily, in order to achieve the above objectives, the present application further provides a management system for a service board, the management system for the service board includes a first arbitration network element, a second arbitration network element, a second control board and a first service board managed by the first arbitration network element, and a first control board and a second service board managed by the second arbitration network element, the first control board includes a first main control board and a first backup control board; where the first arbitration network element is configured to, in response to a first communication message, query a local second communication message, the first communication message is sent by the second arbitration network element to the first arbitration network element after the second arbitration network element loses connection with the first control board, and the second communication message is a message reported by the first service board to the first arbitration network element; and after determining that the second communication message includes a target message, manage the second service board through the first service board, the target message is a message sent by the second service board to the first service board after the second service board loses connection with the first control board; and
the second arbitration network element is configured to, in response to a disconnection from the first control board, send a first communication message to a first network element connected to the second arbitration network element.

Specific implementations of the management system for a service board of the present application are substantially the same as those of the embodiments of the management method for a service board described above, and are not described herein again.

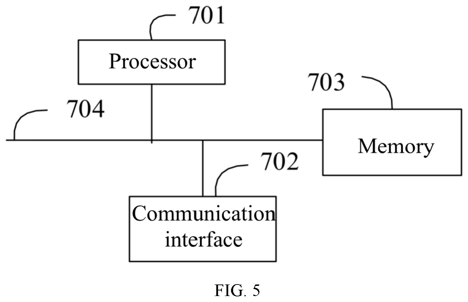

In addition, the present application further provides an electronic device. As shown in FIG. 5, FIG. 5 is a schematic structural diagram of a hardware operating environment involved in this embodiment.

As shown in FIG. 5, the electronic device may include a processor 701, a communication interface 702, a memory 703, and a communication bus 704. The processor 701, the communication interface 702, and the memory 703 complete communication with each other through the communication bus 704. The memory 703 is configured to store a computer program, and the processor 701 is configured to, when executing the program stored in the memory 703, implement steps of the management method for a service board.

The communication bus 704 mentioned in the electronic device may be a Peripheral Component Interconnect (PCI) bus, an Extended Industry Standard Architecture (EISA) bus, or the like. The communication bus 704 may be divided into an address bus, a data bus, a control bus, and the like. For ease of representation, only one thick line is used in the figure, but this does not indicate that there is only one bus or only one type of bus.

The communication interface 702 is configured for communication between the electronic device and other devices.

The memory 703 may include a Random Access Memory (RAM), or may include a Non-Volatile Memory (NVM), such as at least one disk memory. In an embodiment, the memory 703 may also be at least one storage device located away from the processor 701.

The processor 701 may be a general-purpose processor, including a Central Processing Unit (CPU), a Network Processor (NP), and the like; or may be a Digital Signal Processor (DSP), an Application Specific Integrated Circuit (ASIC), a Field-Programmable Gate Array (FPGA), or another programmable logic device, a discrete gate or transistor logic device, or a discrete hardware component.

Specific implementations of the electronic device of the present application are substantially the same as those of the embodiments of the management method for a service board described above, and are not described herein again.

In addition, this embodiment further provides a storage medium, a management program for a service board is stored on the storage medium, and when the management program for the service board is executed by a processor, steps of the management method for a service board described above are implemented.

Specific implementations of the storage medium of the present application are substantially the same as those of the embodiments of the management method for a service board described above, and are not described herein again.

In this specification, the terms "comprise", "include", or any other variants thereof are intended to cover a non-exclusive inclusion, such that a process, method, article, or system comprising a series of elements not only comprises those elements, but also comprises other elements not explicitly listed, or further comprises elements inherent to such process, method, article, or system. Without more limitations, an element defined by the phrase "comprising a ..." does not exclude the presence of other identical elements in the process, method, article, or system comprising the element.

The numbering of the embodiments in the above embodiments is merely for description and does not represent advantages or disadvantages of the embodiments.

Through the description of the above embodiments, those skilled in the art can clearly understand that the methods in the above embodiments may be implemented by means of software in combination with a necessary general-purpose hardware platform, or may be implemented by hardware, but in many cases, the former is a preferable implementation. Based on such understanding, the technical solution of the present application, in essence or the part contributing to the prior art, may be embodied in a form of a software product, where the computer software product is stored in a storage medium as described above (such as a ROM/RAM, a magnetic disk, or an optical disc), and comprises a plurality of instructions for causing a terminal device (which may be a mobile phone, a computer, a server, or a network device, and the like) to execute the methods described in the embodiments of the present application.

The above descriptions are merely some embodiments of the present application, and are not intended to limit the patent scope of the present application. Any equivalent structural transformation or equivalent process transformation made by using the contents of the specification and drawings of the present application, or any direct or indirect application thereof to other related technical fields, shall likewise fall within the patent protection scope of the present application.

## Claims

1. A management method for a service board, applied to a first arbitration network element, **characterized by** comprising:
in response to a first communication message, querying a local second communication message, wherein the first communication message is sent by a second arbitration network element to the first arbitration network element after the second arbitration network element loses connection with a first control board managed by the second arbitration network element, and the second communication message is a message reported by a first service board managed by the first arbitration network element to the first arbitration network element; and
after determining that the second communication message comprises a target message, managing a second service board through the first service board, wherein the target message is a message sent by the second service board managed by the second arbitration network element to the first service board after a disconnection occurs between the second service board and the first control board.

2. The management method according to claim 1, wherein the first control board comprises a first main control board and a first backup control board.

3. The management method according to claim 1, wherein before managing the second service board through the first service board, the method further comprises:
sending a feedback message to the second arbitration network element, wherein the feedback message is configured to indicate that the first arbitration network element manages the second service board.

4. The management method according to claim 1, wherein managing the second service board through the first service board comprises:
in response to a service instruction corresponding to the second service board sent by the second arbitration network element, transmitting the service instruction to the second service board through the first service board, wherein the service instruction is sent by the second arbitration network element to the first arbitration network element after receiving the feedback message.

5. The management method according to claim 1, further comprising:
determining a source address of a communication message in the second communication message; and
determining that the communication message having a source address corresponding to the second service board is the target message.

6. The management method according to claim 1, wherein the first communication message and the second communication message are both one of a handshake message and a heartbeat message, and parameter types of the first communication message and the second communication message are identical.

7. The management method according to claim 1, wherein before querying the local second communication message in response to the first communication message, the method further comprises:
receiving the second communication message reported by the first service board through a second control board, wherein the second control board is a control board managed by the first arbitration network element.

8. A management method for a service board, applied to a second arbitration network element, **characterized by** comprising:
in response to a disconnection from a first control board, sending a first communication message to a first network element connected to the second arbitration network element, such that a first arbitration network element in the first network element manages a second service board managed by the second arbitration network element based on the first communication message,
wherein the first control board is a control board managed by the second arbitration network element, and the first control board comprises a first main control board and a first backup control board.

9. The management method according to claim 8, wherein after sending the first communication message to the first network element connected to the second arbitration network element, the method further comprises:
in response to a feedback message sent by the first arbitration network element, sending a service instruction corresponding to the second service board to the first arbitration network element,
wherein the feedback message is configured to indicate that the first arbitration network element manages the second service board, the feedback message is sent by the first arbitration network element to the second arbitration network element after determining that a target message exists in a second communication message, the second communication message is reported by a first service board managed by the first arbitration network element to the first arbitration network element, the target message is a message sent by the second service board managed by the second arbitration network element to the first service board after a disconnection occurs between the second service board and the first control board, and the first service board and the second service board are directly connected.

10. The management method according to claim 8, wherein the first arbitration network element is a first-hop arbitration network element directly connected to the second arbitration network element.

11. The management method according to claim 8, wherein the first arbitration network element is a first-hop network element directly connected to the second arbitration network element in the first network element, and the first-hop network element is configured as the first arbitration network element in response to a failure of the second arbitration network element.

12. A management system for a service board, **characterized by** comprising: a first arbitration network element, a second arbitration network element, a second control board and a first service board managed by the first arbitration network element, a first control board and a second service board managed by the second arbitration network element, and the first control board comprising a first main control board and a first backup control board, wherein:
the first arbitration network element is configured to, in response to a first communication message, query a local second communication message, wherein the first communication message is sent by the second arbitration network element to the first arbitration network element after the second arbitration network element loses connection with the first control board, and the second communication message is a message reported by the first service board to the first arbitration network element; and after determining that the second communication message comprises a target message, manage the second service board through the first service board, wherein the target message is a message sent by the second service board to the first service board after the second service board loses connection with the first control board; and
the second arbitration network element is configured to, in response to disconnection from the first control board, send a first communication message to a first network element connected to the second arbitration network element.

13. An electronic device, **characterized by** comprising:
a memory;
a processor; and
a management program for a service board stored on the memory and executable on the processor, wherein the management program for the service board is configured to execute the management method for the service board according to any one of claims 1 to 7, or the management method for the service board according to any one of claims 8 to 11.

14. A storage medium, storing a management program for a service board, **characterized in that**, the management program for the service board is executed by a processor to implement the management method for the service board according to any one of claims 1 to 7, or to implement the management method for the service board according to any one of claims 8 to 11.
